(19) Europäisches Patentamt
European Patent Office
Office européen des brevets

(11) Veröffentlichungsnummer: **0 293 667 A1**

(12) **EUROPÄISCHE PATENTANMELDUNG**

(21) Anmeldenummer: **88107901.6**

(22) Anmeldetag: **18.05.88**

(51) Int. Cl.⁴: **C07F 9/24 , C07F 9/44 , A01N 57/04**

(30) Priorität: **30.05.87 DE 3718239**
**17.12.87 DE 3742818**

(43) Veröffentlichungstag der Anmeldung: **07.12.88 Patentblatt 88/49**

(84) Benannte Vertragsstaaten: **BE CH DE ES FR GB GR IT LI NL**

(71) Anmelder: **BAYER AG**
**Konzernverwaltung RP Patentabteilung**
**D-5090 Leverkusen 1 Bayerwerk(DE)**

(72) Erfinder: **Riebel, Hans-Jochem**
**In der Beek 92**
**D-5600 Wuppertal 1(DE)**
Erfinder: **Brandes, Wilhelm, Dr.**
**Eichendorffstrasse 3**
**D-5653 Leichlingen(DE)**

(54) **Alpha-(O-Alkylamino(thio)phosphoryl-oximino)-cyanessigsäureamide.**

(57) α-(O-Dialkylamino(thio)phosphoryl-oximino)-cyanessigsäureamide der allgemeinen Formel (I)

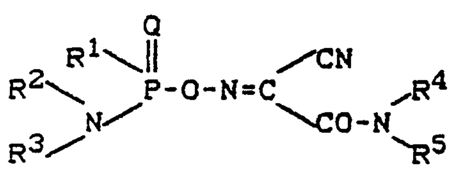
(I)

in welcher
$R^1$ bis $R^5$ die in der Beschreibung gegebenen Bedeutungen haben, und deren Verwendung als Bekämpfung von Schädlingen.
die neuen Verbindungen sind durch die Formel (I) definiert, sie können nach Analogieverfahren hergestellt werden, z.B. aus geeigneten (Thio)Phosphonsäurechloridalkylamiden mit geeigneten 2-Cyano-2-hydroximino-acetamiden.

EP 0 293 667 A1

## α-(O-Alkylamino(thio)phosphoryl-oximino)-cyanessigsäureamide

Die vorliegende Erfindung betrifft neue α-(O-Alkylamino(thio)phophoryl-oximino)-cyanessigsäureamide, ein Verfahren zu ihrer Herstellung und ihre Verwendung zur Bekämpfung von Schädlingen, vor allem Pilzen.

Phosphoryloximino-acetamide, wie z. B. das 2-Cyano-2-(O,O-diethylphosphono-oximino)-N,N-diethylglyoxylamid und das 2-Cyano-2-(ethyl-O-ethyl-phosphinyl-oximino)-N,N-diethylglyoxylamid, und deren Verwendung als Insektizide sind bereits bekannt (vgl. US-PS 3 642 957).

Weiterhin sind O,O-Dialkylthiophosphoryl-oximinoacetamide, die 2-Cyano-2-(O,O-dimethyl- und O,O-diethylthionophosphino-oximino)-acetamide, under deren Verwendung als Fungizide bekannt (vgl. US-PS 3 957 847 und US-PS 3 954 992). Die Verbindungen sind auch als Ausgangsverbindungen zur Herstellung anderer biologisch aktiver Verbindungen beschrieben (vgl. US-PS 3 919 284).

Weiter ist bekannt, daß bestimmte O,O-Dialkyl-(pyrazolo-[1,5-a]-pyrimidin-2-yl)-thionophosphorsäureester, wie z. B. O,O-Diethyl-O-(6-ethoxycarbonyl-5-methyl-pyrazolo-[1,5-a]-pyrimidin-2-yl)-thionophosphorsäureester (Pyrazophos), fungizid wirksam sind (vgl. DE-AS 15 45 790).

Schließlich ist auch die Verwendung von weiteren Phosphoryloximinoacetamiden, wie z. B. von 2-Cyano-2-(ethoxy-isopropylamino-thionophosphoryl)-oximino-acetamid und von 2-Cyano-2-(ethoxy-propylthiothionophosphoryl)-oximino-acetamid, in fungiziden Mitteln bekannt geworden (vgl. DE-OS 34 29 434).

Die Wirkung dieser bekannten Verbindungen ist jedoch, insbesondere bei niedrigen Aufwandmengen bzw. Wirkstoffkonzentrationen, nicht immer ganz befriedigend.

Es wurden nun neue α-(O-Alkylamino(thio)phosphoryloximino)-cyanessigsäureamide der allgemeinen Formel (I)

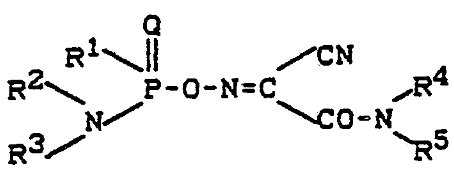

(I)

in welcher
Q für Sauerstoff oder Schwefel steht,
$R^1$ für Alkyl, Alkoxy, Alkylthio, Alkylamino oder Dialkylamino steht,
$R^2$ für Alkyl steht,
$R^3$ für Wasserstoff oder Alkyl steht,
$R^4$ für Wasserstoff oder Alkyl steht und
$R^5$ für Wasserstoff oder Alkyl steht
- mit der Maßgabe, daß wenigstens einer der Reste $R^3$, $R^4$, $R^5$ für Alkyl steht -
gefunden.

Man erhält die neuen Verbindungen der allgemeinen Formel (I),

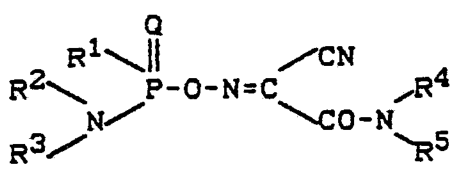

(I)

in welcher
Q für Sauerstoff oder Schwefel steht,
$R^1$ für Alkyl, Alkoxy, Alkylthio, Alkylamino oder Dialkylamino steht,
$R^2$ für Alkyl steht,
$R^3$ für Wasserstoff oder Alkyl steht,
$R^4$ für Wasserstoff oder Alkyl steht und
$R^5$ für Wasserstoff oder Alkyl steht
- mit der Maßgabe, das wenigstens einer der Reste $R^3$, $R^4$, $R^5$ für Alkyl steht -
wenn man 2-Cyano-2-hydroximino-acetamide der Formel (II)

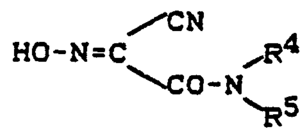

in welcher
$R^4$ und $R^5$ die oben angegebenen Bedeutungen haben,
bzw. Alkalimetall-, Erdalkalimetall- oder Ammoniumsalz hiervon, mit (Thio)Phosphorsäure- bzw. (Thio)-Phosphonsäure-chlorid-alkylamiden der allgemeinen Formel (III)

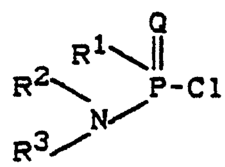 (III)

in welcher
Q, $R^1$, $R^2$ und $R^3$ die oben angegebenen Bedeutungen haben,
gegebenenfalls in Gegenwart eines Säureakzeptors und gegebenenfalls in Gegenwart eines Verdünnungsmittels umsetzt.

Die neuen α-(O-Alkylamino(thio)phosphoryl-oximino)-cyanessigsäureamide der Formel (I) zeichnen sich u.a. durch eine sehr starke fungizide Wirkung aus.

Überraschenderweise zeigen die erfindungsgemäßen α-(O-Alkylamino(thio)phosphoryl-oximino)-cyanessigsäureamide der allgemeinen Formel (I) erheblich stärkere fungizide Wirkung als nach Struktur und Wirkprofil vergleichbare bekannte Phosphorverbindungen, wie z. B. O,O-Diethyl-O-(6-ethoxycarbonyl-5-methyl-pyrazolo[1,5-a]-pyrimidin-2-yl)-thionophosphorsäureester, 2-Cyano-2-(ethoxy-isopropylamino-thionophosphoryl)-oximino-acetamid und 2-Cyano-2-(ethoxy-propylthio-thionophosphoryl)-oximino-acetamid. Wegen ihrer höheren Hydrolysestabilität sind sie auch besser als jene zur dauerhaften Bekämpfung von Pflanzenkrankheiten geeignet. Die Erfindung betrifft vorzugsweise Verbindungen der Formel (I), in welcher
Q für Sauerstoff oder Schwefel steht,
$R^1$ für geradkettiges oder verzweigtes Alkyl mit 1 bis 6 Kohlenstoffatomen, für geradkettiges oder verzweigtes Alkoxy mit 1 bis 6 Kohlenstoffatomen, für geradkettiges oder verzweigtes Alkylthio mit 1 bis 6 Kohlenstoffatomen, für geradkettiges oder verzweigtes Alkylamino mit 1 bis 6 Kohlenstoffatomen oder für Dialkylamino mit 1 bis 4 Kohlenstoffatomen je Alkylrest steht,
$R^2$ für geradkettiges oder verzweigtes Alkyl mit 1 bis 6 Kohlenstoffatomen steht,
$R^3$ für Wasserstoff oder für geradkettiges oder verzweigtes Alkyl mit 1 bis 6 Kohlenstoffatomen steht,
$R^4$ für Wasserstoff oder für geradkettiges oder verzweigtes Alkyl mit 1 bis 6 Kohlenstoffatomen steht und
$R^5$ für Wasserstoff oder für geradkettiges oder verzweigtes Alkyl mit 1 bis 6 Kohlenstoffatomen steht
- mit der Maßgabe, daß wenigstens einer der Reste $R^3$, $R^4$, $R^5$ für Alkyl steht.

Die Erfindung betrifft insbesondere Verbindungen der Formel (I), in welcher
Q für Sauerstoff oder Schwefel steht,
$R^1$ für Methyl, Ethyl, Methoxy, Ethoxy, Propoxy, Isopropoxy, Butoxy, Isobutoxy, Methylthio, Ethylthio, Propylthio, Isopropylthio, Butylthio, Isobutylthio, Methylamino, Ethylamino, Propylamino, Isopropylamino, Butylamino, Isobutylamino, Dimethylamino, oder Diethylamino steht,
$R^2$ für Methyl, Ethyl oder Propyl steht,
$R^3$ für Methyl, Ethyl, Propyl, Isopropyl, Butyl oder Isobutyl steht und
$R^4$ und $R^5$ für Wasserstoff stehen.

Die Erfindung betrifft weiterhin insbesondere Verbindungen der Formel (I), in welcher
Q für Sauerstoff oder Schwefel steht,
$R^1$ für Methyl, Ethyl, Methoxy, Ethoxy, Propoxy, Isopropoxy, Butoxy, Isobutoxy, Methylthio, Ethylthio, Propylthio, Isopropylthio, Butylthio, Isobutylthio, Methylamino, Ethylamino, Propylamino, Isopropylamino, Butylamino, Isobutylamino, Dimethylamino oder Diethylamino steht,
$R^2$ für Methyl, Ethyl oder Propyl steht,
$R^3$ für Wasserstoff, Methyl, Ethyl, Propyl, Isopropyl, Butyl oder Isobutyl steht,
$R^4$ für Wasserstoff, Methyl, Ethyl oder Propyl steht und
$R^5$ für Wasserstoff, Methyl, Ethyl, Propyl, Isopropyl, Butyl oder Isobutyl steht,

- mit der Maßgabe, daß wenigstens einer der Reste $R^3$, $R^4$, $R^5$ vom Wasserstoff verschieden ist.

Verwendet man beispielsweise Thionomethanphosphonsäurechlorid-dimethylamid und das Kaliumslaz von 2-Cyano-2-hydroximino-acetamid als Ausgangsstoffe, so kann der Reaktionsverlauf beim erfindungsgemäßen Herstellungsverfahren durch das folgende Formelschema wiedergegeben werden:

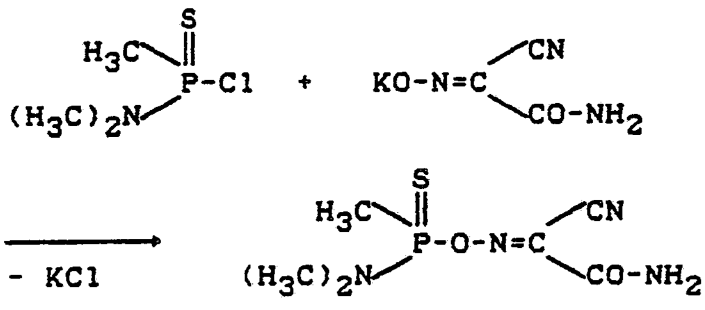


Die als Ausgangsstoffe beim erfindungsgemäßen Verfahren zu verwendenden 2-Cyano-2-hydroximinoacetamide sind durch die Formel (II) allgemein definiert. In dieser Formel haben $R^4$ und $R^5$ vorzugsweise bzw. insbesondere die gleichen Bedeutungen, wie sie bereits in Zusammenhang mit der Beschreibung der erfindungsgemäßen Ver bindungen der Formel (I) vorzugsweise bzw. als insbesondere bevorzugt genannt wurden.

Als Beispiele für die Ausgangsstoffe der Formel (II) seien genannt:
2-Cyano-2-hydroximino-acetamid, 2-Cyano-2-hydroximino-essigsäure-, -methylamid, -ethylamid, -propylamid, -isopropylamid, -butylamid-, -isobutylamid, -dimethylamid und -diethylamid.

Die weiter als Ausgangsstoffe beim erfindungsgemäßen Verfahren zu verwendenden 2-Cyano-2-hydroximino-acetamide der Formel (II) sowie deren Natrium-, Kalium-, Calcium-und Ammoniumsalze sind bekannt (vgl. US-PS 3 954 992 und DE-OS 2 312 956).

Die weiter als Ausgangsstoffe zu verwendenden (Thio)-Phosphorsäure- bzw. (Thio)Phosphonsäurechlorid-alkylamide sind durch die Formel (III) allgemein definiert. In dieser Formel haben Q, $R^1$, $R^2$ und $R^3$ vorzugsweise bzw. insbesondere die gleichen Bedeutungen, wie sie bereits im Zusammenhang mit der Beschreibung der erfindungsgemäßen Verbindungen der Formel (I) vorzugsweise bzw. als insbesondere bevorzugt genannt wurden.

Beispiele für die Ausgangsstoffe der Formel (III) sind in der nachstehenden Tabelle I aufgeführt.

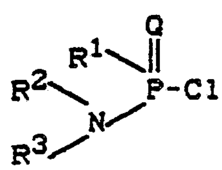
(III)

<u>Tabelle 1</u>: Beispiele für die Ausgangsstoffe der Formel (III)

| Q | $R^1$ | $R^2$ | $R^3$ |
|---|---|---|---|
| O | $CH_3$ | $CH_3$ | $CH_3$ |
| S | $CH_3$ | $CH_3$ | $CH_3$ |
| O | $C_2H_5$ | $CH_3$ | $CH_3$ |
| S | $C_2H_5$ | $CH_3$ | $CH_3$ |
| O | $CH_3$ | $C_2H_5$ | $C_2H_5$ |
| S | $CH_3$ | $C_2H_5$ | $C_2H_5$ |
| O | $C_2H_5$ | $C_2H_5$ | $C_2H_5$ |
| O | $CH_3$ | $CH_3$ | $C_3H_7$ |
| S | $CH_3$ | $CH_3$ | $C_3H_7$ |
| O | $CH_3$ | $CH_3$ | $CH(CH_3)_2$ |
| O | $CH_3$ | $CH_3$ | $C_4H_9$ |
| S | $C_2H_5$ | $CH_3$ | $CH_2CH(CH_3)_2$ |
| O | $OCH_3$ | $CH_3$ | $CH_3$ |
| S | $OCH_3$ | $CH_3$ | $CH_3$ |
| O | $OC_2H_5$ | $CH_3$ | $CH_3$ |
| S | $OC_2H_5$ | $CH_3$ | $CH_3$ |
| O | $OCH_3$ | $C_2H_5$ | $C_2H_5$ |
| S | $OCH_3$ | $C_2H_5$ | $C_2H_5$ |
| O | $OCH_3$ | $CH_3$ | $CH(CH_3)_2$ |
| S | $OCH_3$ | $CH_3$ | $C_4H_9$ |
| O | $OCH_3$ | $CH_3$ | $CH_2CH(CH_3)_2$ |
| O | $OCH_3$ | $CH_3$ | H |
| S | $OCH_3$ | $CH_3$ | H |
| O | $OCH_3$ | $CH_3$ | H |
| S | $OC_2H_5$ | $CH_3$ | H |

Tabelle 1 - Fortsetzung

| Q | $R^1$ | $R^2$ | $R^3$ |
|---|---|---|---|
| O | $OC_2H_5$ | $C_2H_5$ | $C_2H_5$ |
| O | $OCH_3$ | $C_3H_7$ | $C_3H_7$ |
| S | $OC_2H_5$ | $C_2H_5$ | $C_2H_5$ |
| S | $OCH_3$ | $C_3H_7$ | $C_3H_7$ |
| O | $OC_3H_7$ | $CH_3$ | $CH_3$ |
| S | $OC_3H_7$ | $CH_3$ | $CH_3$ |
| O | $OCH(CH_3)_2$ | $CH_3$ | $CH_3$ |
| S | $OCH(CH_3)_2$ | $CH_3$ | $CH_3$ |
| O | $OC_4H_9$ | $CH_3$ | $CH_3$ |
| S | $OC_4H_9$ | $CH_3$ | $CH_3$ |
| O | $OC_2H_5$ | $C_3H_7$ | $C_3H_7$ |
| O | $OCH(CH_3)_2$ | $C_2H_5$ | $C_2H_5$ |
| S | $OCH(CH_3)_2$ | $C_2H_5$ | $C_2H_5$ |
| O | $SCH_3$ | $CH_3$ | $CH_3$ |
| S | $SCH_3$ | $CH_3$ | $CH_3$ |
| O | $SC_2H_5$ | $CH_3$ | $CH_3$ |
| S | $SC_2H_5$ | $CH_3$ | $CH_3$ |
| O | $SCH_3$ | $C_2H_5$ | $C_2H_5$ |
| S | $SCH_3$ | $C_2H_5$ | $C_2H_5$ |
| O | $SC_2H_5$ | $C_2H_5$ | $C_2H_5$ |
| S | $SC_2H_5$ | $C_2H_5$ | $C_2H_5$ |
| O | $OCH_3$ | $C_2H_5$ | H |
| S | $OCH_3$ | $C_2H_5$ | H |
| O | $OC_2H_5$ | $C_2H_5$ | H |
| S | $OC_2H_5$ | $C_2H_5$ | H |

Tabelle 1 - Fortsetzung

| Q | $R^1$ | $R^2$ | $R^3$ |
|---|---|---|---|
| O | $SC_3H_7$ | $CH_3$ | $CH_3$ |
| S | $SC_3H_7$ | $CH_3$ | $CH_3$ |
| S | $SC_2H_5$ | $C_2H_5$ | $C_2H_5$ |
| O | $SCH(CH_3)_2$ | $CH_3$ | $CH_3$ |
| S | $SCH(CH_3)_2$ | $CH_3$ | $CH_3$ |
| O | $SC_4H_9$ | $CH_3$ | $CH_3$ |
| S | $SC_4H_9$ | $CH_3$ | $CH_3$ |
| S | $SCH_2CH(CH_3)_2$ | $CH_3$ | $CH_3$ |
| O | $NHCH_3$ | $CH_3$ | $CH_3$ |
| S | $NHCH_3$ | $CH_3$ | $CH_3$ |
| O | $NHC_2H_5$ | $CH_3$ | $CH_3$ |
| S | $NHC_2H_5$ | $CH_3$ | $CH_3$ |
| O | $NHCH_3$ | $C_2H_5$ | $C_2H_5$ |
| S | $NHCH_3$ | $C_2H_5$ | $C_2H_5$ |
| O | $NHC_2H_5$ | $C_2H_5$ | $C_2H_5$ |
| S | $NHC_2H_5$ | $C_2H_5$ | $C_2H_5$ |
| O | $NHC_3H_7$ | $CH_3$ | $CH_3$ |
| S | $NHC_3H_7$ | $CH_3$ | $CH_3$ |
| O | $NHCH(CH_3)_2$ | $CH_3$ | $CH_3$ |
| S | $NHCH(CH_3)_2$ | $CH_3$ | $CH_3$ |
| O | $NHC_4H_9$ | $CH_3$ | $CH_3$ |
| O | $OC_3H_7$ | $CH_3$ | H |
| S | $OC_3H_7$ | $CH_3$ | H |
| O | $OCH(CH_3)_2$ | $CH_3$ | H |
| S | $OCH(CH_3)_2$ | $CH_3$ | H |

Tabelle 1 - Fortsetzung

| Q | $R^1$ | $R^2$ | $R^3$ |
|---|---|---|---|
| S | $NHC_4H_9$ | $CH_3$ | $CH_3$ |
| O | $NHCH_2CH(CH_3)_2$ | $CH_3$ | $CH_3$ |
| S | $NHCH_2CH(CH_3)_2$ | $CH_3$ | $CH_3$ |
| O | $N(CH_3)_2$ | $CH_3$ | $CH_3$ |
| S | $N(CH_3)_2$ | $CH_3$ | $CH_3$ |
| O | $N(C_2H_5)_2$ | $C_2H_5$ | $C_2H_5$ |
| S | $N(C_2H_5)_2$ | $C_2H_5$ | $C_2H_5$ |

Die Verbindungen der Formel (III) sind bekannt und/oder können nach an sich bekannten Verfahren hergestellt werden (vgl. Houben-Weyl, Methoden der organischen Chemie, 4. Auflage, Band E2 (1982), S. 338 - 340, 435 - 436, 544 - 546, 553 - 554, 555 - 557; Thieme-Verlag-Stuttgart-New York).

Das erfindungsgemäße Verfahren zur Herstellung der neuen Verbindungen der Formel (I) wird vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methylisopropyl- und Methyl-isobutyl-keton, Ester wie Essigsäuremethylester und-ethylester, Nitrile wie z. B. Acetonitril und Propionitril, Amide wie z. B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem erfindungsgemäßen Verfahren alle üblicherweise für derartige Umsetzungen verwendbaren Säurebindemittel eingesetzt werden. Vorzugsweise in Frage kommen Alkalimetallhydroxide wie z. B. Natrium- und Kaliumhydroxid, Erdalkalihydroxide wie z. B. Calciumhydroxid, Alkalicarbonate und -alkoholate wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin, Pyridin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem erfindungsgemäßen Verfahren in einem größeren Bereich variiert werden. Im allgemeinen arbeitet man bei Temperaturen zwischen 0 °C und 100 °C, vorzugsweise bei Temperaturen zwischen 10 °C und 80 °C.

Das erfindungsgemäße Verfahren wird im allgemeinen bei Normaldruck durchgeführt.

Zur Durchführung des erfindungsgemäßen Verfahrens werden die Ausgangsstoffe der Formeln (II) und (III) im allgemeinen in angenähert äquimolaren Mengen eingesetzt. Es ist jedoch auch möglich, eine der beiden Komponenten im Überschuß zu verwenden. Die Umsetzung wird im allgemeinen in einem geeigneten Verdünnungsmittel durchgeführt. Das Reaktionsgemisch wird mehrere Stunden bei der erforderlichen Temperatur gerührt, bis wenigstens einer der Ausgangsstoffe praktisch nicht mehr nachweisbar ist. Die Aufarbeitung erfolgt nach üblichen Methoden. Im allgemeinen geht man so vor, daß man das Reaktionsgemisch - gegebenenfalls nach Einengen - mit Wasser und einem mit Wasser praktisch nicht mischbaren organischen Lösungsmittel schüttelt, die organische Phase abtrennt, trocknet, filtriert und vom Filtrat das Lösungsmittel abdestilliert. Das im Rückstand verbleibende Rohprodukt kann nach üblichen Methoden, beispielsweise durch Umkristallisation, gereinigt werden.

Die erfindungsgemäßen Wirkstoffe weisen eine stark mikrobizide Wirkung auf und können zur Bekämpfung von unerwünschten Mikroorganismen praktisch eingesetzt werden. Die Wirkstoffe sind für den Gebrach als Pflanzenschutzmittel einsetzbar, vor allem als Fungizide.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Beispielhaft aber nicht begrenzend seien einige Erreger von pilzlichen Erkrankungen, die unter die oben aufgezählten Oberbegriffe fallen, genannt:

Pythium-Arten, wie beispielsweise Pythium ultimum;

Phytophthora-Arten, wie beispielsweise Phytophthora infestans;

Pseudoperonospora-Arten, wie beispielsweise Pseudoperonospora humuli oder Pseudoperonospora cubensis;

Plasmopara-Arten, wie beispielsweise Plasmopara viticola;

Peronospora-Arten, wie beispielsweise Peronospora pisi oder P. brassicae;

Erysiphe-Arten, wie beispielsweise Erysiphe graminis;

Sphaerotheca-Arten, wie beispielsweise Sphaerotheca fuliginea;

Podosphaera-Arten, wie beispielsweise Podosphaera leucotricha;

Venturia-Arten, wie beispielsweise Venturia inaequalis;

Pyrenophora-Arten, wie beispielswise Pyrenophora teres oder P. graminea (Konidienform: Drechslera, Syn: Helminthosporium);

Cochliobolus-Arten, wie beispielsweise Cochliobolus sativus (Konidienform: Drechslera, Syn: Helminthosporium);

Uromyces-Arten, wie beispielsweise Uromyces appendiculatus;

Puccinia-Arten, wie beispielsweise Puccinia recondita;

Tilletia-Arten, wie beispielsweise Tilletia caries;

Ustilago-Arten, wie beispielsweise Ustilago nuda oder Ustilago avenae;

Pellicularia-Arten, wie beispielsweise Pellicularia sasakii;

Pyricularia-Arten, wie beispielsweise Pyricularia oryzae;

Fusarium-Arten, wie beispielsweise Fusarium culmorum;

Botrytis-Arten, wie beispielsweise Botrytis cinerea;

Septoria-Arten, wie beispielsweise Septoria nodorum;

Leptosphaeria-Arten, wie beispielsweise Leptosphaeria nodorum;

Cercospora-Arten, wie beispielsweise Cercospora canescens;

Alternaria-Arten, wie beispielsweise Alternaria brassicae;

Pseudocercosporella-Arten, wie beispielsweise Pseudocercosporella herpotrichoides.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Verbindungen der Formel (I) zeigen insbesondere starke protektive Wirkung gegen Phytophthora-Arten, wie z. B. Phytophthora infestans, und gegen Plasmopara-Arten, wie z. B. Plasmopara viticola, welche im Gartenbau und im Weinbau Schäden verursachen. Auch gegen Pyricularia oryzae wird gute Wirkung beobachtet.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte ali phatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem

Material wie Sägemehl, Kokosnußschalen, Maiskolben und Tabakstengel; als Emulgier und/oder - schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen in Mischung mit anderen bekannten Wirkstoffen vorliegen wie Fungizide, Insektizide, Akarizide und Herbizide sowie in Mischungen mit Düngemitteln und Wachstumsregulatoren.

Die Wirkstoffe konnen als solche, in Form ihrer Formulierungen oder den daraus bereiteten Anwendungsformen wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Ver streuen, Verstäuben, Verschäumen, Bestreichen usw.. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 % am Wirkungsort erforderlich.

Herstellungsbeispiele

Beispiel 1

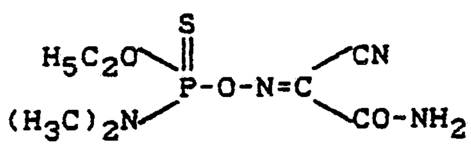

Eine Mischung aus 13,5 g (0,1 Mol) des Natriumsalzes von 2-Cyano-2-hydroximino-acetamid, 18,7 g (0,1 Mol) Thionophosphorsäure-chlorid-dimethylamid-ethylester und 100 ml Acetonitril wird 18 Stunden bei 60 °C gerührt. Anschließend wird das Reaktionsgemisch mit 200 ml Wasser verdünnt und zweimal mit je 100 ml Methylenchlorid extrahiert. Die vereinigten organischen Extrakte werden eingedampft und der Rückstand wird aus Ligroin umkristallisiert. Man erhält 17 g (64 % der Theorie) 2-Cyano-2-(dimethylamino-ethoxy-thionophosphoryl)-oximino-essigsäureamid vom Schmelzpunkt 92 °C.

Analog Beispiel 1 können die in der nachstehenden Tabelle 2 aufgeführten Verbindungen der Formel (I) hergestellt werden.

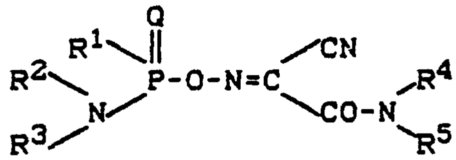 (I)

Tabelle 2: Beispiele für Verbindungen der Formel (I)

| Bsp.-Nr. | Q | $R^1$ | $R^2$ | $R^3$ | $R^4$ | $R^5$ | Schmelzpunkt ($^0C$) bzw. Brechnungsindex |
|---|---|---|---|---|---|---|---|
| 2 | S | $OC_2H_5$ | $C_2H_5$ | $C_2H_5$ | H | H | 109 |
| 3 | S | $OC_2H_5$ | $C_3H_7$ | $C_3H_7$ | H | H | |
| 4 | S | $OCH_3$ | $C_2H_5$ | $C_2H_5$ | H | H | |
| 5 | O | $N(CH_3)_2$ | $CH_3$ | $CH_3$ | H | H | |
| 6 | O | $N(C_2H_5)_2$ | $C_2H_5$ | $C_2H_5$ | H | H | |
| 7 | S | $OCH(CH_3)_2$ | $C_2H_5$ | $C_2H_5$ | H | H | |
| 8 | S | $OCH(CH_3)_2$ | $CH_3$ | $CH_3$ | H | H | |
| 9 | S | $OCH_3$ | $CH_3$ | $CH_3$ | H | H | 94 |
| 10 | S | $OC_2H_5$ | $CH_3$ | $CH_3$ | $CH_3$ | H | 69 |
| 11 | S | $OC_2H_5$ | $CH_3$ | H | $CH_3$ | H | $n_D^{21}$: 1,5320 |
| 12 | S | $OC_2H_5$ | $C_2H_5$ | $C_2H_5$ | $CH_3$ | H | $n_D^{21}$: 1,5180 |
| 13 | S | $OCH_3$ | $CH_3$ | $CH_3$ | $CH_3$ | $CH_3$ | |
| 14 | S | $OC_2H_5$ | $CH_3$ | H | $CH(CH_3)_2$ | H | $n_D^{21}$: 1,5126 |
| 15 | S | $OC_2H_5$ | $CH_3$ | $CH_3$ | $CH(CH_3)_2$ | H | $n_D^{21}$: 1,5014 |
| 16 | S | $OC_2H_5$ | $C_2H_5$ | H | $CH(CH_3)_2$ | H | $n_D^{21}$: 1,4980 |
| 17 | O | $N(CH_3)_2$ | $CH_3$ | $CH_3$ | $CH(CH_3)_2$ | H | $n_D^{21}$: 1,4870 |
| 18 | S | $OCH_3$ | $CH_3$ | $CH_3$ | $CH_3$ | H | 79 |
| 19 | O | $N(CH_3)_2$ | $CH_3$ | $CH_3$ | $CH_3$ | H | (amorph) |
| 20 | S | $OC_2H_5$ | $C_2H_5$ | H | $CH_3$ | H | $n_D^{21}$: 1,5194 |

Verwendungsbeispiele

In den nachstehenden Verwendungsbeispielen werden die nachstehend angegebenen Verbindungen als Vergleichssubstanzen eingesetzt.

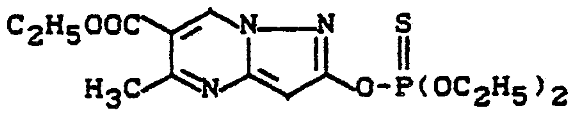

(A)

(bekannt aus DE-AS 15 45 790)

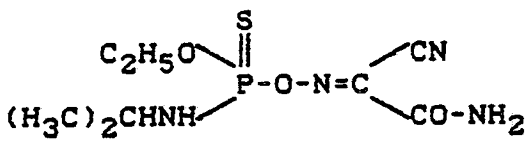

(B)

(bekannt aus DE-OS 34 29 434)

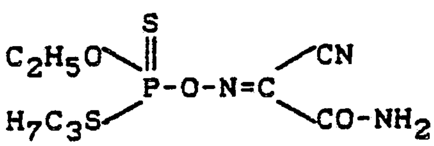

(C)

(bekannt aus DE-OS 34 29 434)

Beispiel A

Phytophthora-Test (Tomate)/protektiv

Lösungsmittel: 4,7 Gewichtsteile Aceton
Emulgator: 0,3 Gewichtsteile Alkylarylpolyglycolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Phytophthora infestans inokuliert.

Die Pflanzen werden in einer Inkubationskabine mit 100% relativer Luftfeuchtigkeit und ca. 20 °C aufgestellt.

3 Tage nach der Inokulation erfolgt die Auswertung.

Eine deutliche Überlegenheit in der Wirksamkeit gegenüber dem Stand der Technik zeigen in diesem Test z. B. die Verbindungen gemäß den Herstellungbeispielen (1), (2), (9) und (10).

Beispiel B

Plasmopara-Test (Reben) / protektiv

Lösungsmittel: 4,7 Gewichtsteile Aceton
Emulgator: 0,3 Gewichtsteile Alkylarylpolyglycolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Plasmopara viticola inokuliert und verbleiben dann 1 Tag in einer Feuchtkammer bei 20 bis 22 °C und 100 % relativer Luftfeuchtigkeit. Anschließend werden die Pflanzen 5 Tage im Gewächshaus bei 22 °C und ca. 80 % Luftfeuchtigkeit aufgestellt. Die Pflanzen werden dann angefeuchtet und 1 Tag in eine Feuchtkammer gestellt.

7 Tage nach der Inokulation erfolgt die Auswertung.

Eine deutliche Überlegenheit in der Wirksamkeit gegenüber dem Stand der Technik zeigt in diesem Test z. B. die Verbindung gemäß dem Herstellungbeispiel (1).

**Ansprüche**

1. α-(O-Alkylamino(thio)phosphoryl-oximino)-cyanessigsäureamide der allgemeinen Formel (I)

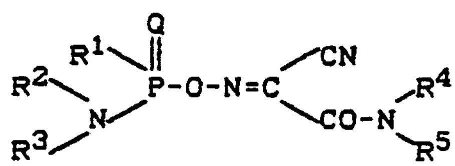 (I)

in welcher
Q für Sauerstoff oder Schwefel steht,
$R^1$ für Alkyl, Alkoxy, Alkylthio, Alkylamino oder Dialkylamino steht,
$R^2$ für Alkyl steht,
$R^3$ für Wasserstoff oder Alkyl steht,
$R^4$ für Wasserstoff oder Alkyl steht und
$R^5$ für Wasserstoff oder Alkyl steht, mit der Maßnahme, daß wenigstens einer der Reste $R^3$, $R^4$, $R^5$ für Alkyl steht.

2. α-(O-Alkylamino(thio)phosphoryl-oximino)-cyanesigsäureamide gemäß Anspruch 1, worin in der Formel (I)
Q für Sauerstoff oder Schwefel steht,
$R^1$ für geradkettiges oder verzweigtes Alkyl mit 1 bis 6 Kohlenstoffatomen, für geradkettiges oder verzweigtes Alkoxy mit 1 bis 6 Kohlenstoffatomen, für geradkettiges oder verzweig tes Alkylthio mit 1 bis 6 Kohlenstoffatomen, für geradkettiges oder verzweigtes Alkylamino mit 1 bis 6 Kohlenstoffatomen und für Dialkylamino mit 1 bis 4 Kohlenstoffatomen je Alkylrest steht,
$R^2$ für Wasserstoff oder geradkettiges oder verzweigtes Alkyl mit 1 bis 6 Kohlenstoffatomen steht und
$R^3$ für geradkettiges oder verzweigtes Alkyl mit 1 bis 6 Kohlenstoffatomen steht,
$R^4$ für Wasserstoff oder für geradkettiges oder verzweigtes Alkyl mit 1 bis 6 Kohlenstoffatomen steht und
$R^5$ für Wasserstoff oder für geradkettiges oder verzweigtes Alkyl mit 1 bis 6 Kohlenstoffatomen steht
- mit der Maßgabe, daß wenigstens einer der Reste $R^3$, $R^4$, $R^5$ für Alkyl steht.

3. α-(O-Dialkylamino(thio)phosphoryl-oximino)-cyanessigsäureamide gemäß Anspruch 1, worin in der Formel (I)
Q für Sauerstoff oder Schwefel steht,
$R^1$ für Methyl, Ethyl, Methoxy, Ethoxy, Propoxy, Isopropoxy, Butoxy, Isobutoxy, Methylthio, Ethylthio, Propylthio, Isopropylthio, Butylthio, Isobutylthio, Methylamino, Ethylamino, Propylamino, Isopropylamino, Butylamino, Isobutylamino, Dimethylamino, oder Diethylamino steht,
$R^2$ für Methyl, Ethyl oder Propyl steht und
$R^3$ für Methyl, Ethyl, Propyl, Isopropyl, Butyl oder Isobutyl steht und
$R^4$ und $R^5$ für Wasserstoff stehen.

4. α-(O-Alkylamino(thio)phosphoryl-oximino)-cyanessigsäureamide gemäß Anspruch 1, worin in der Formel (I)
Q für Sauerstoff oder Schwefel steht,
$R^1$ für Methyl, Ethyl, Methoxy, Ethoxy, Propoxy, Isopropoxy, Butoxy, Isobutoxy, Methylthio, Ethylthio, Propylthio, Isopropylthio, Butylthio, Isobutylthio, Methylamino, Ethylamino, Propylamino, Isopropylamino, Butylamino, Isobutylamino, Dimethylamino oder Diethylamino steht,
$R^2$ für Methyl, Ethyl oder Propyl steht,
$R^3$ für Wasserstoff, Methyl, Ethyl, Propyl, Isopropyl, Butyl oder Isobutyl steht,
$R^4$ für Wasserstoff, Methyl, Ethyl oder Propyl steht und
$R^5$ für Wasserstoff, Methyl, Ethyl, Propyl, Isopropyl, Butyl oder Isobutyl steht,
- mit der Maßgabe, daß wenigstens einer der Reste $R^3$, $R^4$, $R^5$ von Wasserstoff verschieden ist.

5. Verfahren zur Herstellung von α-(O-Alkylamino(thio)phosphoryl-oximino)-cyanessigsäureamiden der allgemeinen Formel (I)

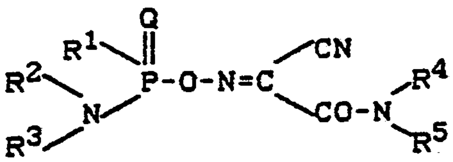 (I)

in welcher
Q für Sauerstoff oder Schwefel steht,
$R^1$ für Alkyl, Alkoxy, Alkylthio, Alkylamino oder Dialkylamino steht,
$R^2$ für Alkyl steht und
$R^3$ für Wasserstoff oder Alkyl steht,
$R^4$ für Wasserstoff oder Alkyl steht und
$R^5$ für Wasserstoff oder Alkyl steht
- mit der Maßgabe, das wenigstens einer der Reste $R^3$, $R^4$, $R^5$ für Alkyl steht -
dadurch gekennzeichnet, daß man 2-Cyano-2-hydroximino-acetamide der Formel (II)

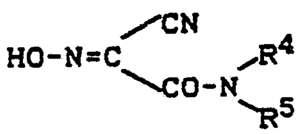 (II)

in welcher
$R^4$ und $R^5$ die oben angegebenen Bedeutungen haben, bzw. Alkalimetall-, Erdalkalimetall- oder Ammoniumsalze hiervon, mit (Thio)Phosphorsäure-bzw. (Thio)Phosphonsäure-chlorid-dialkylamiden der allgemeinen Formel (III)

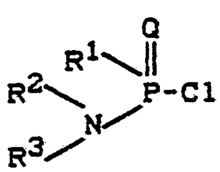 (III)

in welchen
Q, $R^1$ bis $R^3$ die oben angegebenen Bedeutungen haben,
gegebenenfalls in Gegenwart eines Säureakzeptors und gegebenenfalls in Gegenwart eines Verdünnungsmittels umsetzt.

6. Schädlingsbekämpfungsmittel, gekennzeichnet durch einen Gehalt an mindestens einem α-(O-Alkylamino(thio)phosphoryl-oximino)-cyanessigsäureamid der Formel (I) nach den Ansprüchen 1 und 5.

7. Verwendung von α-(O-Alkylamino(thio)phosphoryl-oximino)-cyanessigsäureamiden der Formel (I) nach den Ansprüchen 1 und 5 zur Bekämpfung von Schädlingen.

8. Verfahren zur Bekämpfung von Schädlingen, dadurch gekennzeichnet, daß man 2-(O-Alkylamino-(thio)phosphoryl-oximino)-cyanessigsäureamide der Formel (I) nach den Ansprüchen 1 und 5 auf Schädlinge und/oder ihren Lebensraum einwirken läßt.

9. Verfahren zur Herstellung von Schädlingsbekämpfungsmitteln, dadurch gekennzeichnet, daß man α-(O-Alkylamino(thio)phosphoryl-oximino)-cyanessigsäureamide der Formel (I) nach den Ansprüchen 1 und 5 mit Streckmitteln und/oder oberflächenaktiven Mitteln vermischt.

Europäisches Patentamt

# EUROPÄISCHER RECHERCHENBERICHT

Nummer der Anmeldung

EP 88 10 7901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 173 857 (BAYER AG)<br>* Anspruch 9 * & DE - A - 3 429 434<br>(Cat. Y,D)<br>--- | 1 | C 07 F 9/24<br>C 07 F 9/44<br>A 01 N 57/04 |
| Y,D | US-A-3 642 957 (J. BILLET)<br>* Formeln Spalte 1 * | 1 | |
| X,D | * Anspruch 10 *<br>--- | 5 | |
| A | EP-A-0 074 047 (BASF AG)<br>* Anspruch 1 *<br>----- | 1 | |

RECHERCHIERTE SACHGEBIETE (Int. Cl.4)

C 07 F 9/24
C 07 F 9/44
A 01 N 57/04

Der vorliegende Recherchenbericht wurde für alle Patentansprüche erstellt

| Recherchenort | Abschlußdatum der Recherche | Prüfer |
|---|---|---|
| BERLIN | 18-08-1988 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)